# EUROPEAN PATENT SPECIFICATION

(11) **EP 4 427 581 B1**
(45) Date of publication and mention of the grant of the patent: **30.09.2026**
(21) Application number: 24158585.0
(22) Date of filing: 20.02.2024
(51) Int. Cl.: A01G 3/053

(54) **ELECTRIC WORKING MACHINE**
ELEKTRISCHE ARBEITSMASCHINE
MACHINE DE TRAVAIL ÉLECTRIQUE

(30) Priority: 10.03.2023 JP 2023038140
(43) Date of publication of application: 11.09.2024
(73) Proprietor: YAMABIKO CORPORATION, Ohme-shi, Tokyo 1988760 (JP)
(72) Inventor: KODAMA, Hisao, Tokyo 1988760 (JP); NAKAJIMA, Yoshie, Tokyo 1988760 (JP)
(74) Representative: Winter, Brandl - Partnerschaft mbB

(56) References cited:
- CN-A- 101 053 303
- CN-A- 110 115 167
- CN-U- 207 854 542
- JP-A- 2022 053 268
- US-A1- 2022 408 655

## Description

### BACKGROUND

The present invention relates to an electric working machine.

### RELATED ART

As conventional technology, JP 2022-53268 A may be cited.

CN 207 854 542 U discloses a modular power tool including a housing, an electric motor, an extension rod and a drive member. The rotation axis of the motor is arranged along the front-rear direction of the housing.

However, the conventional technology disclosed in JP 2022-53268 A does not sufficiently enable miniaturization of a housing.

In view of the above circumstances, the present invention aims to provide an electric working machine with a miniaturized housing.

This object is solved by the subject matter of the independent claim. Further aspects are disclosed in the dependent claims. According to the present invention, a hand-held electric working machine for cutting a work object is provided. The electric working machine comprises a working portion, a housing, a motor, and a control unit. The working portion is configured to cut the work object. The housing extends in a first direction from a rear side where a user is positioned to a front side where the work object is positioned. The motor is configured to generate rotary power for allowing the working portion to drive, includes a stator, an outer rotor, an output axis, an output gear, a base member and is provided on the rear side of the housing, displaced in a second direction with respect to a centerline of the housing, the centerline extending in the first direction, the second direction being perpendicular to the first direction. The centerline extends in the first direction, and the second direction is perpendicular to the first direction. The control unit is configured to electrically control rotation of the motor and is positioned opposite the motor across the centerline. The stator has two or more coils. A lower end of the base member is fixed to a case of a drive transmission mechanism. The output axis is inserted into a bearing provided on an inner circumferential surface of the base member, and the output axis is inserted into a bearing provided on an inner circumferential surface of the stator. The output gear is provided at a lower end of the output axis, and the output gear is meshed with a drive gear of the drive transmission mechanism. The outer rotor includes a cylindrical peripheral wall surrounding the stator and outer circumference of each coil. A top that covers an upper surface of the peripheral wall, and an upper end of the output axis is connected to a center of a top of the outer rotor.

According to this configuration it is possible to realize miniaturization of a housing.

### BRIEF DESCRIPTION OF DRAWINGS

FIG. 1 is an overall perspective view of a hedge trimmer 11 as viewed from above.
FIG. 2 is an overall perspective view of a hedge trimmer 11 as viewed from below.
FIG. 3 is a view from a rear side of a hedge trimmer 11 in a state where a rear handle 5 is removed.
FIG. 4 is a view from a left side of a housing 2 in a state represented by an A-A section shown in FIG. 3 and a motor 23 in a state represented by a section along a rotation center O of the motor 23.
FIG. 5 is a view from above of a housing 2 in a state where a part of the housing 2 is removed or sectioned.
FIG. 6 is a view from above of a housing 2 in a state where a part of the housing 2 is removed.
FIG. 7 is a view from above of a housing 2 in a state represented by a B-B section shown in FIG. 1, illustrating a first air flow path AP1.
FIG. 8 is an overall perspective view of a fan 24 as viewed from below.
FIG. 9 is a view illustrating an inlet 21 in a state where a part of a housing 2 is sectioned.
FIG. 10 is a view illustrating an outlet 22 in a state where a part of a housing 2 is sectioned and a second air flow path AP2.

### DETAILED DESCRIPTION

Hereinafter, an example of an embodiment of the present invention will be described with reference to drawings.

### 1. Overall configuration

In Chapter 1, an electric working machine 1 according to the present embodiment will be described. The electric working machine 1 is a hand-held electric working machine for cutting a work object. Preferably, the electric working machine 1 is a hedge trimmer 11, a brush cutter (not shown), or a chainsaw (not shown). According to such a manner, a miniaturized hedge trimmer 11, a brush cutter, or a chainsaw can be used to cut a work object. The hedge trimmer 11 (electric working machine 1) will be described below as an example.

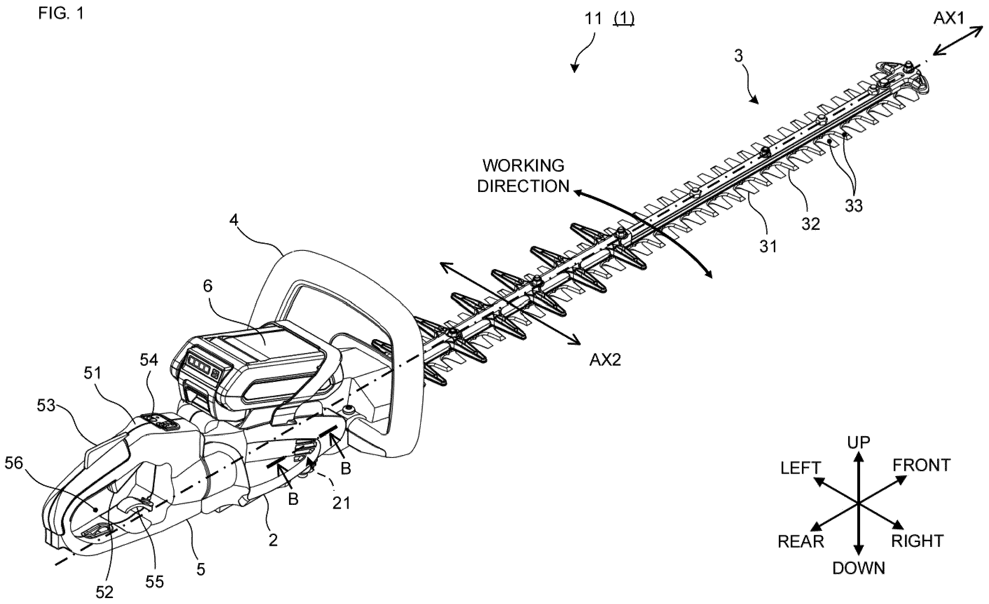

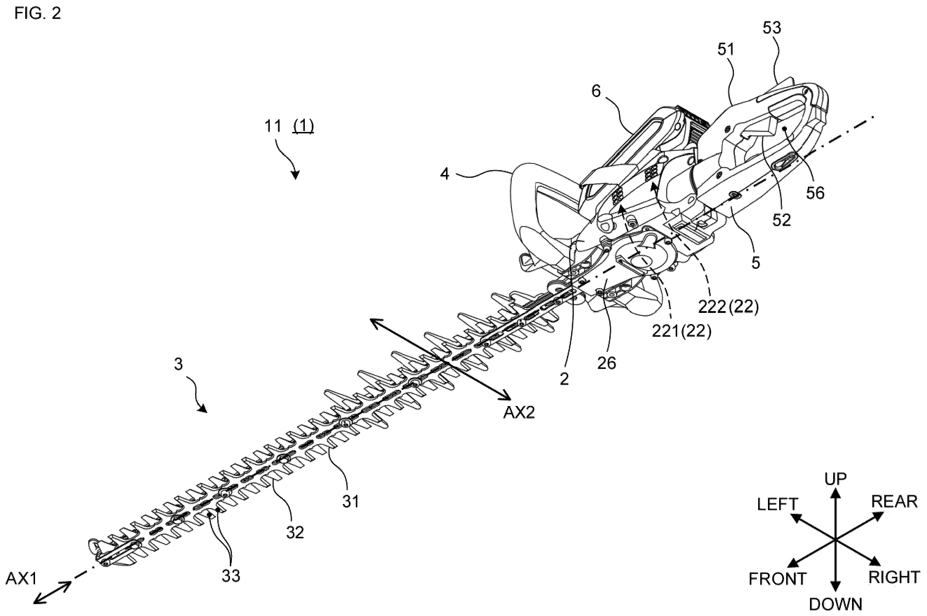

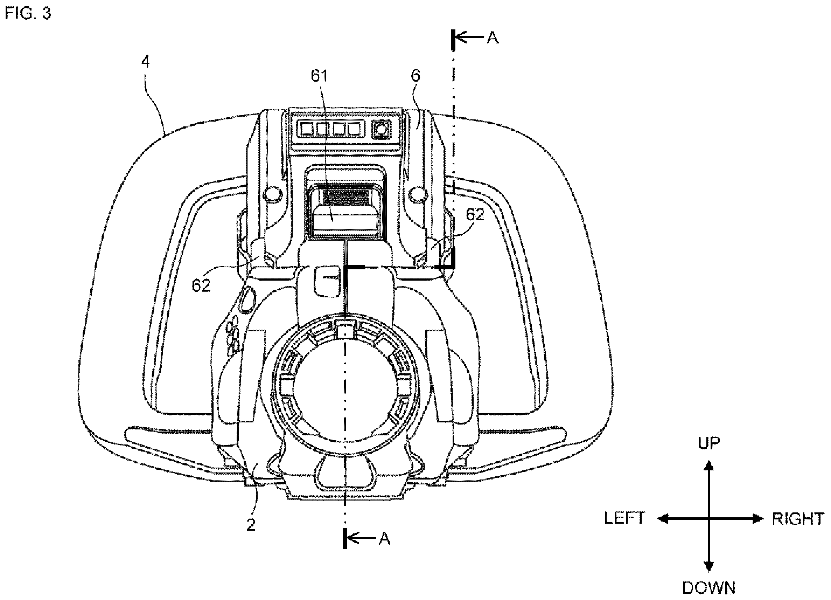

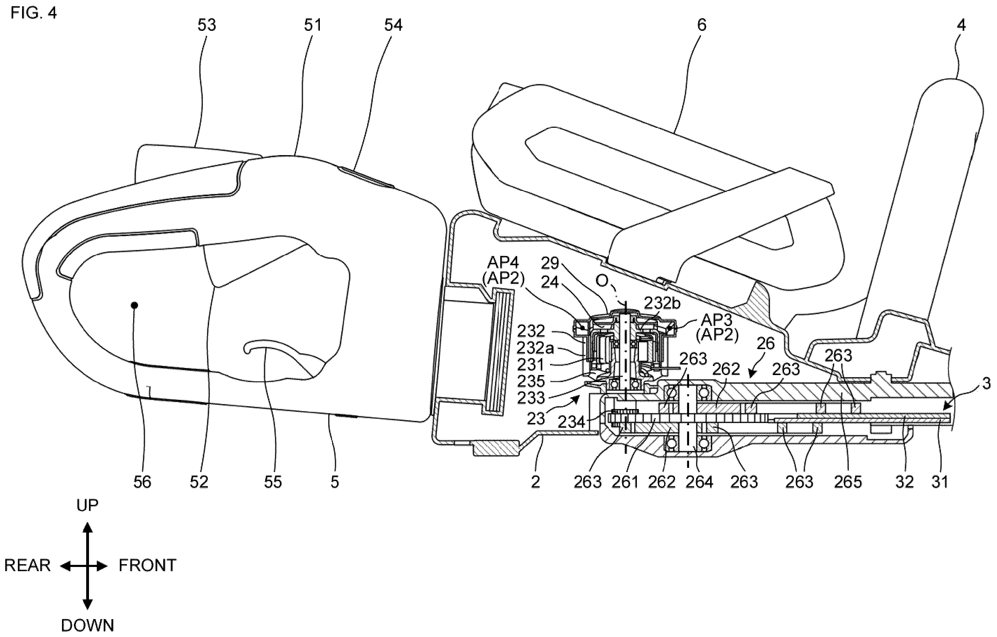

FIG. 1 is an overall perspective view of the hedge trimmer 11 as viewed from above. FIG. 2 is an overall perspective view of the hedge trimmer 11 as viewed from below. As shown in FIGS. 1 and 2, the hedge trimmer 11, which is the electric working machine 1, comprises a housing 2, a working portion 3, a front handle 4, a rear handle 5, and a battery 6. FIG. 3 is a view from a rear side of the hedge trimmer 11 in a state where the rear handle 5 is removed. FIG. 4 is a view from a left side of the housing 2 in a state represented by an A-A section shown in FIG. 3 and a motor 23 in a state represented by a section along a rotation center O of the motor 23. It should be noted that directions of each component configuring the hedge trimmer 11 are defined based on "up," "down," "left," "right," "front," and "rear" shown in the drawings.

### (Housing 2)

In the present embodiment, the housing 2 is a box containing a mechanical and electrical equipment that allows the hedge trimmer 11 to operate. The housing 2 extends in a first direction AX1 from a rear side where a user is positioned to a front side where a work object is positioned, with the housing 2 as reference. The housing 2 is a plastic box with an upper surface inclined with respect to a lower surface. The upper surface of the housing 2 inclines downward from a rear side toward a front side. In other words, the housing 2 is formed with front lower than rear. The housing 2 is approximately triangular in shape in a side view. An internal component of the housing 2 will be described in detail later.

### (Inlet 21 and outlet 22)

As shown in FIGS. 1 and 2, the housing 2 includes an inlet 21 and an outlet 22 for circulating air inside the housing 2. The inlet 21 is provided on a side part of a right side of the housing 2 to allow air to be drawn from outside to inside of the housing 2. The outlet 22 is provided on a side part of a left side of the housing 2 to allow air to be exhausted from inside of the housing 2 to outside. Preferably, as shown in the drawing, the outlet 22 has a first outlet 221 and a second outlet 222 positioned differently from the first outlet 221. In other words, the inlet 21 is provided on a side of the housing 2 positioned in a second direction AX2 with respect to a centerline of the housing 2. The centerline extends in the first direction AX1, and the second direction AX2 is perpendicular to the first direction AX1. The outlet 22 is provided on a side of the housing 2, opposite to the inlet 21 across the centerline. With such a manner, the inlet 21 and the outlet 22 are provided on opposite side parts of the housing 2, preventing air used for cooling from being drawn again. This ensures efficient cooling of a control unit 27 and the motor 23. Details regarding cooling will be described later.

### (Drive transmission mechanism 26)

As shown in FIG. 2, the housing 2 comprises a drive transmission mechanism 26 on a lower side of the housing 2. As shown in FIG. 4, the drive transmission mechanism 26 includes a drive gear 261, two upper and lower cams 262 provided on the drive gear 261, and two upper and lower movable plates 263. The drive gear 261 is a disk-shaped gear with a support axis 264 protruding from a center in a vertical direction. Upper and lower ends of the support axis 264 are rotatably supported by upper and lower bearings provided in a case 265. In other words, the drive gear 261 rotates around an axis of the support axis 264.

Two upper and lower cams 262 protrude from an upper surface and a lower surface of the drive gear 261, respectively. The cams 262 are provided at positions eccentric with respect to a rotation center of the drive gear 261.

The upper cam 262 is inserted into an opening at a rear end of the upper movable plate 263, and a front end of the upper movable plate 263 is connected to a rear end of an upper cutter 32. The lower cam 262 is inserted into an opening at a rear end of the lower movable plate 263, and a front end of the lower movable plate 263 is connected to a rear end of a lower cutter 31.

In the drive transmission mechanism 26, the two upper and lower cams 262 rotate and move respectively as the drive gear 261 rotates, enabling the two upper and lower movable plates 263 to reciprocate in a front-rear direction, respectively, in such a manner that the upper cutter 32 and the lower cutter 31 move reciprocally in opposite front-rear direction.

### (Working portion 3)

As shown in FIGS. 1 and 2, the working portion 3 is provided on a front side of the housing 2. The working portion 3 comprises a blade 33 for cutting a work object and is configured to drive by rotation of the motor 23. In other words, the working portion 3 is configured to cut the work object. Specifically, the working portion 3 comprises the lower cutter 31 and the upper cutter 32. That is, the working portion is configured to cut the work object. The lower cutter 31 and the upper cutter 32 are superimposed on each other and are provided so as to be relatively slidable along a longitudinal direction (front-rear direction). It should be noted that a configuration of the lower cutter 31 and a configuration of the upper cutter 32 are substantially the same blade configuration. The hedge trimmer 11 shown in FIGS. 1 and 2 is a dual-blades specification with blades 33 provided on both sides of a left-right direction, but the configuration may be a single-blade specification with the blade 33 provided on one side in a left-right direction as well.

### (Front handle 4 and rear handle 5)

As shown in FIGS. 1 and 2, the hedge trimmer 11 comprises a front handle 4 provided on a front side of the housing 2 and a rear handle 5 provided on a rear side of the housing 2. By grasping the front handle 4 and the rear handle 5 by a hand, the hedge trimmer 11 can be operated.

The front handle 4 has a horizontal portion extending in a left-right direction and a vertical portion extending downward from left and right ends of the horizontal portion, and these are integrally formed. Lower ends of two vertical portions are fixed to a front end of the housing 2.

The rear handle 5 is connected to rear of the housing 2, rotatable about an axis along a front-rear direction as a central axis. A gripping portion 51 with an opening 56 formed therethrough in a left-right direction is formed on the rear handle 5. When an operator, who is a user, holds the hedge trimmer 11, he/she grips the rear handle 5 by inserting a hand into the opening 56 of the gripping portion 51.

As shown in FIGS. 1 and 2, a throttle lever 52, which serves as an operation means to allow the working portion 3 to drive while being gripped by the operator, is provided on an inner circumference of the gripping portion 51 of the rear handle 5. Further, on an upper side of the gripping portion 51, a lock release lever 53 to prevent and release a displacement (operation) of the throttle lever 52 is provided along with a power switch 54. Furthermore, on a lower side of the gripping portion 51, a rotation lock lever 55 is provided to prevent and release rotation of the rear handle 5 with respect to the housing 2 when the working portion 3 is not in operation.

### (Battery 6)

The battery 6 is a common battery that realizes a predetermined output by accommodating two or more lithium-ion battery cells in a rectangular case extending in a front-rear direction. The battery 6 is configured to be mountable on a battery mounting portion 62 provided on an upper surface of the housing 2. The battery mounting portion 62 is inclined downward from rear to front in alignment with the upper surface of the housing 2.

Although not shown in the drawing, an engagement portion engaging with the battery mounting portion 62 protrudes from a rear end of a lower surface of the battery 6. When mounting the battery 6 to the battery mounting portion 62, a lower portion of the battery 6 is allowed to fit into the battery mounting portion 62 while sliding the battery 6 with respect to the battery mounting portion 62 from rear to front. When the battery 6 is allowed to move to a position where a front end of the battery 6 is supported by a front end of the battery mounting portion 62, the engagement portion of the battery 6 engages with the battery mounting portion 62 and the battery 6 is fixed to the battery mounting portion 62.

The battery 6 mounted on the battery mounting portion 62 is inclined downward from rear to front, with front positioned lower than rear. On an upper surface of the battery mounting portion 62, a metallic connection terminal (not shown) is provided. The connection terminal is electrically connected to the motor 23 or the control unit 27. By electrically connecting a connection terminal of the battery 6 to the connection terminal of the battery mounting portion 62, power is supplied from the battery 6 to the motor 23 or the control unit 27.

When removing the battery 6 from the battery mounting portion 62, lifting a connection lever 61 (refer to FIG. 3) provided at a rear end of the battery 6 to release an engagement state between the battery mounting portion 62 and the engagement portion, allowing the battery 6 to slide backward with respect to the battery mounting portion 62.

### 2. Internal component of housing 2

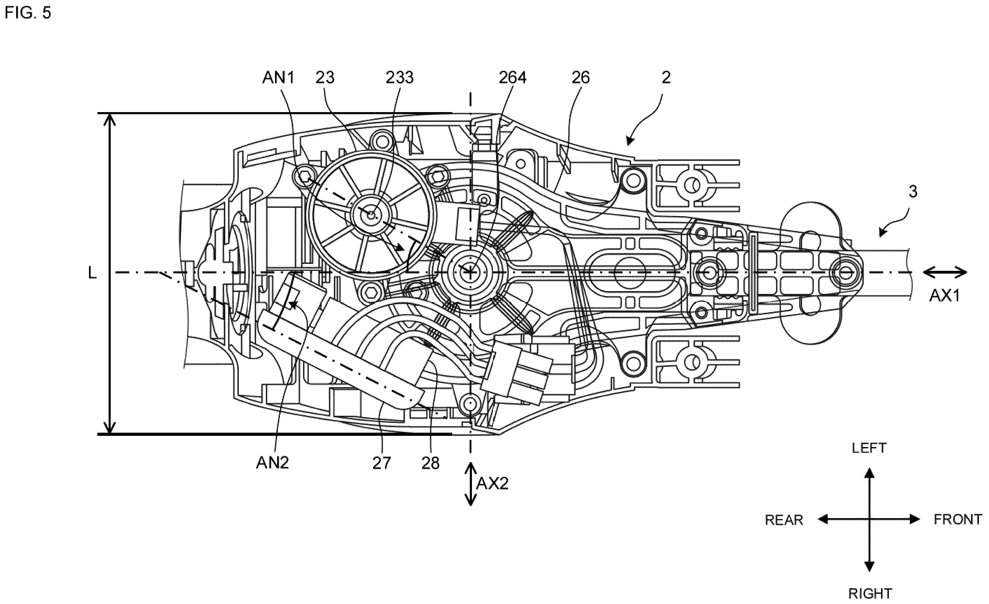

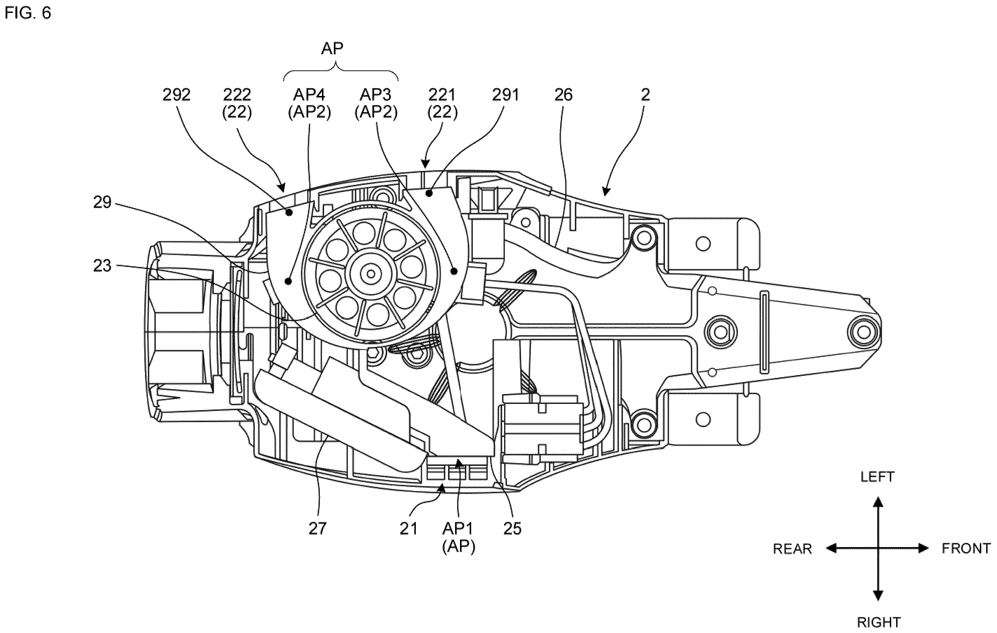

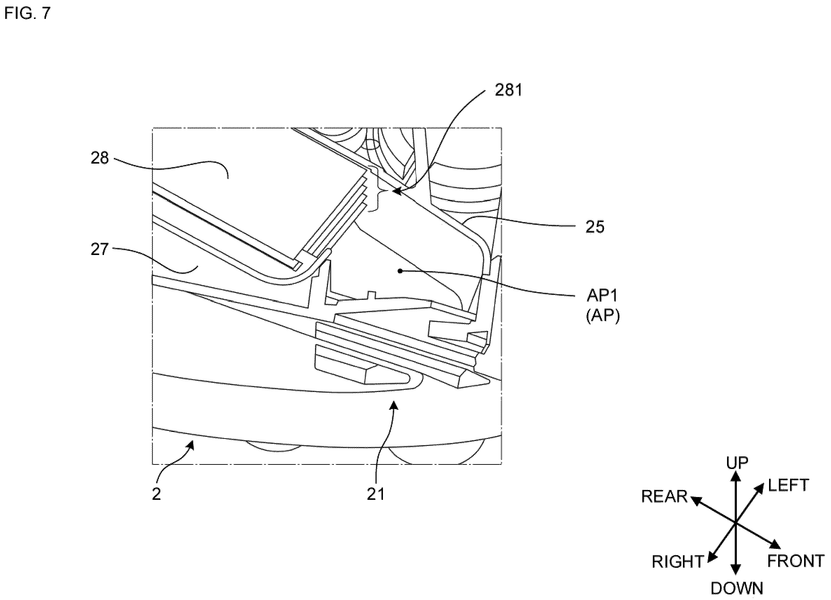

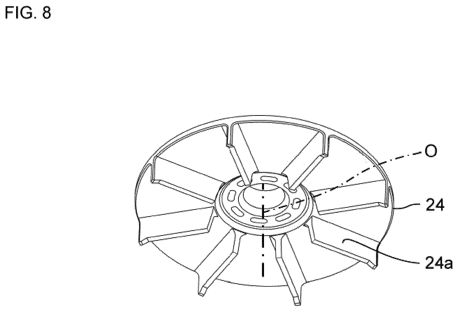

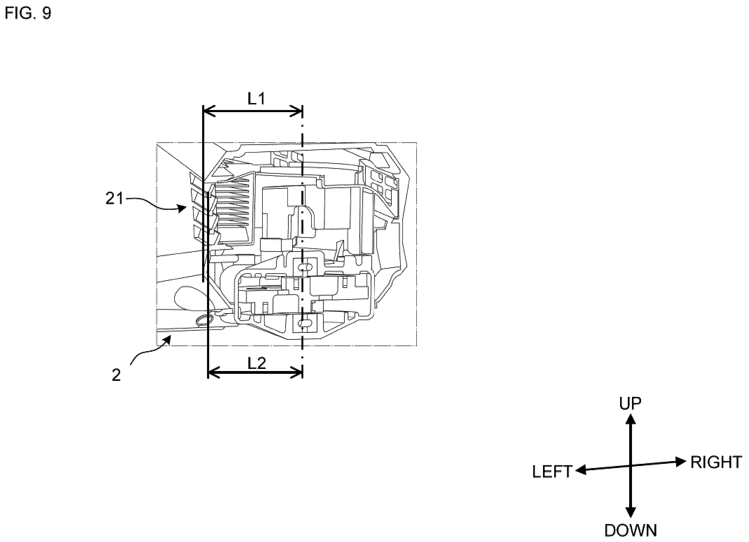

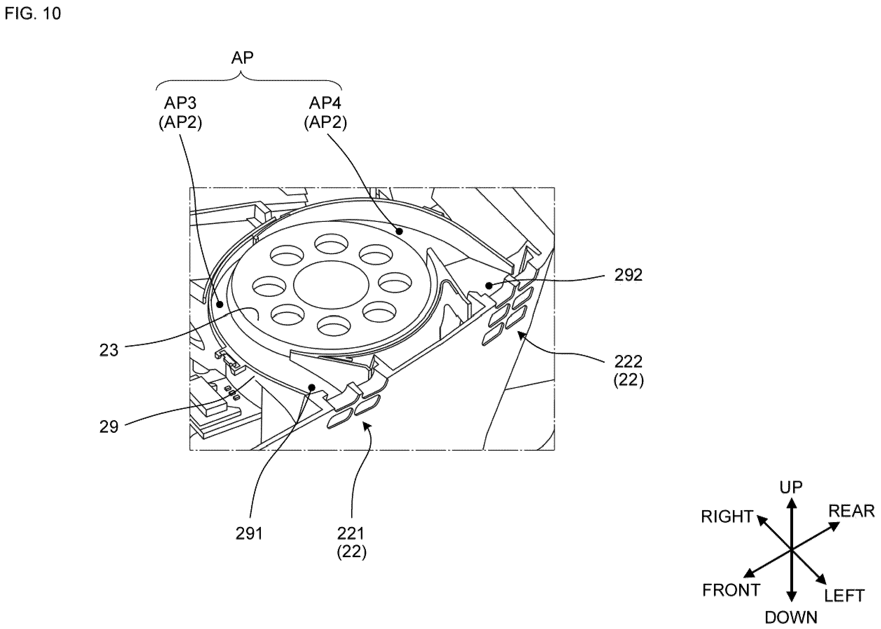

This chapter describes an internal component of the housing 2. FIG. 5 is a view from above of the housing 2 in a state where a part of the housing 2 is removed or sectioned. FIG. 6 is a view from above of the housing 2 in a state where a part of the housing 2 is removed. FIG. 7 is a view from above of the housing 2 in a state represented by a B-B section shown in FIG. 1, illustrating a first air flow path AP1. FIG. 8 is an overall perspective view of a fan 24 as viewed from below. FIG. 9 is a view illustrating the inlet 21 in a state where a part of the housing 2 is sectioned. FIG. 10 is a view illustrating the outlet 22 and a second air flow path AP2 in a state where a part of the housing 2 is sectioned. As shown in FIGS. 4 to 10, the housing 2 includes the motor 23, a fan 24, a guide portion 25, the control unit 27, and a heat sink 28 therein.

### (Motor 23)

As shown in FIG. 4, the motor 23 includes a stator 231, an outer rotor 232, an output axis 233, an output gear 234, and a base member 235. The stator 231 has two or more coils. A lower end of the base member 235 is fixed to the case 265 of the drive transmission mechanism 26.

The output axis 233 is inserted into a bearing provided on an inner circumferential surface of the base member 235. This allows the output axis 233 to be rotatably supported by the base member 235. The output axis 233 is inserted into a bearing provided on an inner circumferential surface of the stator 231. This allows the output axis 233 to be rotatably supported by the stator 231. The output gear 234 is provided at a lower end of the output axis 233. The output gear 234 is meshed with the drive gear 261 of the drive transmission mechanism 26.

The outer rotor 232 includes a cylindrical peripheral wall 232a surrounding the stator 231 and outer circumference of each coil, and a top 232b that covers an upper surface of the peripheral wall 232a. Two or more magnets are attached to an inner circumferential surface of the peripheral wall 232a.

An upper end of the output axis 233 is connected to a center of a top 232b of the outer rotor 232. Thus, the outer rotor 232 is rotatably supported by the stator 231, and the output axis 233 and the outer rotor 232 rotate in conjunction. The rotation center O of the outer rotor 232 and the output axis 233 extends in a vertical direction of the housing 2.

The outer rotor 232 is rotatably supported by the stator 231 and is connected to a rear end of the working portion 3 through the drive transmission mechanism 26. When power is supplied from the battery 6 to each coil of the stator 231, the outer rotor 232 and the output axis 233 rotate, and driving force thereof is transmitted to the working portion 3 via the drive transmission mechanism 26, causing the lower cutter 31 and the upper cutter 32 to reciprocate in opposite front-back direction. In other words, the motor 23 is configured to allow rotary power to be generated allowing the working portion 3 to drive.

### (Fan 24)

The fan 24 is connected to an upper end of the output axis 233 of the motor 23 and is positioned inside an air flow path AP, as shown in FIG. 4. That is, the motor 23 comprises the fan 24 that rotates in conjunction with rotation of the motor 23. Thereby, the fan 24 is configured to circulate air inside the air flow path AP by the rotation of the motor 23. Specifically, the fan 24 is configured to exhaust air inside the air flow path AP from the outlet 22 toward outside of the housing 2, and to draw in air outside the housing 2 from the inlet 21 toward inside of the housing 2. Further, the motor 23 is configured to rotate in two rotation directions: right rotation and left rotation. The fan 24 has two or more linear-shaped vanes 24a so as to extend straight outward in a circumferential direction from the rotation center O, which is a center of an axis on which the motor rotates, as shown in FIG. 8. Such a manner enables air to circulate regardless of whether the rotation direction is left or right.

### (Control unit 27)

As shown in FIGS. 5 and 6, the control unit 27 has a box shape and is fixed to the housing 2. The control unit 27 is electrically connected to the battery 6 and the motor 23 by wiring, connector, etc., and controls energization from the battery 6 to the motor 23. In other words, the control unit 27 is configured to electrically control rotation of the motor 23.

### (Guide portion 25)

As shown in FIGS. 6 and 7, the guide portion 25 is provided to form the air flow path AP with a plate-like member. The guide portion 25 is provided on the control unit 27, thereby forming the first air flow path AP1 surrounded by the guide portion 25 and the control unit 27. The first air flow path AP1 is configured to allow air to circulate therein by rotation of the motor 23, thereby cooling the control unit 27. According to such a manner, the control unit 27 may be sufficiently cooled by providing the air flow path AP surrounded by the guide portion 25 and the control unit 27, thereby improving compactness and operability during high-power operation.

### (Fan case 29)

As shown in FIGS. 4 and 6, a fan case 29 is provided to cover outside of the motor 23 and to form the second air flow path AP2. As shown in FIGS. 6 and 10, the second air flow path AP2 has a first discharge 291 and a second discharge 292. The first discharge 291 is provided at a position connected to the first outlet 221, and the second discharge 292 is provided at a position connected to the second outlet 222. Preferably, the second air flow path AP2 may be formed in such a manner that air is circulated inside the motor 23. More preferably, the second air flow path AP2 may be formed in such a manner that air is taken in from a lower part of the motor 23 and air flows toward an upper part of the motor 23. Preferably, the first air flow path AP1 is connected to the second air flow path AP2 provided in a vicinity of the motor 23. The second air flow path AP2 is configured to allow air to circulate therein by rotation of the motor 23, thereby cooling the motor 23 following the control unit 27. In other words, with rotation of the fan 24 accompanying the rotation of the motor 23, air taken from outside to inside of the housing 2 passes through the first air flow path AP1, cooling the control unit 27, and air that has cooled the control unit 27 is taken in from the lower part of the motor 23, passes through an air flow path inside the motor 23, and exhausts air that has cooled electronics (the control unit 27 and the motor 23, etc.) to outside of the housing 2. According to such a manner, by arranging and cooling the motor 23 following the control unit 27, it is possible to suppress temperature rise and enable continuous operation at a high load.

### (Heat sink 28)

As shown in FIGS. 6 and 7, the heat sink 28 is provided in contact with the control unit 27 so as to dissipate heat generated by the control unit 27. The heat sink 28 is provided inside the first air flow path AP1 formed by being surrounded by the guide portion 25 and the control unit 27. In other words, the first air flow path AP1 includes the heat sink 28 therein, the heat sink 28 configured to exchange heat with circulating air. According to such a manner, the control unit 27 may be further cooled by providing the heat sink 28, thus enabling compactness and operation during high-power operation.

Preferably, as shown in FIG. 7, the heat sink 28 has a fin 281 extending vertically from a surface in contact with the control unit 27. The fin 281 extends further in a direction along a flow of air circulating in the first air flow path AP1. With such a manner, cooling performance may be improved, enabling compactness and operation during high-power operation.

As shown in FIG. 6, the housing 2 comprises an air flow path AP therein. The air flow path AP includes the first air flow path AP1 and the second air flow path AP2, and further, the second air flow path AP2 includes a third air flow path AP3 and a fourth air flow path AP4. The first air flow path AP1 is configured in such a manner that one end thereof is connected to the second air flow path AP2 and another end with respect to the one end is connected to the inlet 21. According to such a manner, the control unit 27 may be efficiently cooled. The second air flow path AP2 is configured in such a manner that one end thereof is connected to the first air flow path AP1 and another end with respect to the one end is connected to the outlet 22. According to such a manner, by arranging and cooling the motor 23 following the control unit 27 between the inlet 21 and the outlet 22, it is possible to suppress temperature rise and enable continuous operation at a high load.

As shown in FIG. 4, the fan 24 is provided inside the fan case 29 that forms the air flow path AP. The fan 24 is connected to an upper end of the output axis 233 of the motor 23, rotating with rotation of the motor 23. Thereby, the fan 24 allows air to flow from outside of the housing 2 to inside of the housing 2 and allows air to circulate in the air flow path AP. In other words, the fan 24 is provided inside the second air flow path AP2 by being connected to the upper end of the output axis 233 of the motor 23, allowing air to circulate inside the air flow path AP. As shown in FIG. 10, the second air flow path AP2 has the third air flow path AP3 and the fourth air flow path AP4 to branch air circulation in a vicinity of the fan 24. The third air flow path AP3 and the fourth air flow path AP4 are configured in such a manner that amount of air circulation varies respectively according to a rotation direction of the motor 23. With such a manner, since the fan 24 is provided with an air flow path corresponding to the rotation direction and has linear-shaped blades 24a, it is possible to circulate air regardless of whether the rotation direction is left or right. Preferably, as shown in FIG. 10, the third air flow path AP3 is provided with a portion along approximately half circumference of an outer periphery of the fan 24. The fourth air flow path AP4 is provided so as to have a portion along approximately half circumference of the outer periphery of the fan 24 so as to oppose the third air flow path AP3 across an axis. According to such a manner, it is possible to allow air to circulate efficiently. Even more preferably, as shown in FIG. 10, the third air flow path AP3 and the fourth air flow path AP4 are configured in such a manner that a cross-sectional area of the air flow path AP expands from upstream to downstream in an air flow direction. According to such a manner, it is possible to efficiently circulate air.

As shown in FIG. 10, the outlet 22 is configured in such a manner that the first outlet 221 is connected to the third air flow path AP3 and the second outlet 222 is connected to the fourth air flow path AP4. According to such a manner, air exhausted from the first outlet 221 or the second outlet 222 does not return to inside of the housing 2.

The inlet 21 or the outlet 22 shall preferably be provided on a surface that is recessed from an outer shape of the housing 2. Specifically, as shown in FIG. 9, the housing 2 has a first width L1 and a second width L2 that is narrower than the first width L1 toward a direction where the inlet 21 is provided from the centerline of the housing 2. The inlet 21 is provided on a side of the housing 2 where the second width L2 is positioned. According to such a manner, even when a user, who is an operator, is in contact with the housing 2, it is possible to prevent a body, clothes, etc. of the user from coming into close contact with the housing 2 and blocking the inlet 21 or the outlet 22.

Preferably, as shown in FIG. 9, the inlet 21 shall have a louver so as to prevent an object from entering from an upper direction of the housing 2. With such a manner, rainwater or the like descending from an upper side to a lower side of the housing 2 can be prevented from entering inside of the housing 2.

### 3. Arrangement of motor 23 and control unit 27

In this chapter, an arrangement position of internal components of the housing 2, namely the motor 23 and the control unit 27, will be described. As shown in FIG. 5, the motor 23 is provided on a rear side of the housing 2, displaced in the second direction AX2 with respect to the centerline of the housing 2. The control unit 27 is then provided at a position opposite to the motor 23 across the centerline of the housing 2. The centerline of the housing 2 extends in the first direction AX1, and the second direction AX2 is perpendicular to the first direction AX1. With such a manner, compactness of the housing 2 may be realized. Furthermore, as shown in FIG. 5, the housing 2 has a predetermined width L in the second direction AX2. The motor 23 and the control unit 27 are each provided inside the housing 2 so as not to exceed the predetermined width L. With such a manner, components are arranged so as not to exceed the predetermined width L, enabling miniaturization. In other words, by arranging the motor 23 and the control unit 27 so as not to exceed the width (the predetermined width L) in the second direction AX2 in the drive transmission mechanism 26, the housing 2, etc., it is possible to reduce the width of the housing 2 in the first direction AX1 without increasing the width of the housing 2 in the second direction AX2, enabling miniaturization of the housing 2.

The motor 23 is preferably positioned in an optimal location to enable the miniaturization of the housing 2. As shown in FIG. 5, a first angle AN1 is preferably adopted for the arrangement of the motor 23. Specifically, the first angle AN1 is an acute angle formed by a line connecting a center of the output axis 233, which is a rotation axis of the motor 23, to a center of the support axis 264 (a predetermined position), which is on a centerline of the housing 2, and the centerline of the housing 2. The motor 23 is provided in such a manner that the first angle AN1 is any angle from 15 degrees to 45 degrees. The first angle AN1 may specifically be, for instance, 15, 15.5, 16, 16.5, 17, 17.5, 18, 18.5, 19, 19.5, 20, 20.5, 21, 21.5, 22, 22.5, 23, 23.5, 24, 24.5, 25, 25.5, 26, 26.5, 27, 27.5, 28, 28.5, 29, 29.5, 30, 30.5, 31, 31.5, 32, 32.5, 33, 33.5, 34, 34.5, 35, 35.5, 36, 36.5, 37, 37.5, 38, 38.5, 39, 39.5, 40, 40.5, 41, 41.5, 42, 42.5, 43, 43.5, 44, 44.5, 45 degrees, or may be fall within a range of any two of numerical values exemplified here. With such a manner, the motor 23 may be optimally positioned, enabling miniaturization of the housing 2.

The control unit 27 is preferably positioned in an optimal location to enable the miniaturization of the housing 2. As shown in FIG. 5, a second angle AN2 is preferably adopted for the arrangement of the control unit 27. Specifically, the second angle AN2 is an acute angle formed by a line along a longitudinal direction of the control unit 27 and the centerline of the housing 2. The control unit 27 is provided in such a manner that the second angle AN2 is any angle from 15 degrees to 45 degrees. The second angle AN2 may specifically be, for instance, 15, 15.5, 16, 16.5, 17, 17.5, 18, 18.5, 19, 19.5, 20, 20.5, 21, 21.5, 22, 22.5, 23, 23.5, 24, 24.5, 25, 25.5, 26, 26.5, 27, 27.5, 28, 28.5, 29, 29.5, 30, 30.5, 31, 31.5, 32, 32.5, 33, 33.5, 34, 34.5, 35, 35.5, 36, 36.5, 37, 37.5, 38, 38.5, 39, 39.5, 40, 40.5, 41, 41.5, 42, 42.5, 43, 43.5, 44, 44.5, 45 degrees, or may be fall within a range of any two of numerical values exemplified here. With such a manner, the control unit 27 may be optimally positioned, enabling miniaturization of the housing 2. Additionally, it is further preferable for the control unit 27 to be provided in such a manner that the second angle AN2 is smaller than the first angle AN1. Such a manner allows for the optimal positioning of the motor 23 and the control unit 27, enabling miniaturization of the housing 2.

### [Others]

The present embodiment may be implemented in various manners as follows.

In the example shown in FIGS. 1 and 2, although the inlet 21 is provided on the side part of the right side of the housing 2 and the outlet 22 is provided on the side part of the left side of the housing 2, the configuration is not limited thereto. Specifically, for instance, the inlet 21 and the outlet 22 may be provided on the housing 2 according to a position where a user, who is an operator, grips and operates the electric working machine 1. For example, for a hedge trimmer 11 with dual blades, the inlet 21 and the outlet 22 may be positioned as follows: the inlet 21 is provided on a side where the user, who is the operator, stands for a long time against the hedge trimmer 11, and the outlet 22 is provided on a side opposite to where the user, who is the operator, stands for a long time against the hedge trimmer 11. Further, for a hedge trimmer 11 with a single blade, the inlet 21 and the outlet 22 may be positioned as follows: the inlet 21 is provided on a side where the user, who is the operator, stands against the hedge trimmer 11, and the outlet 22 is provided on a side opposite to where the user, who is the operator, stands against the hedge trimmer 11.

Additionally, the housing 2 may be configured to draw air from outside toward inside of the housing 2 from a portion other than the inlet 21. For instance, the housing 2 may have a gap, a hole, etc. With such a manner, when a user, who is an operator, stands on a side of the inlet 21 and blocks the inlet 21 with his/her body, clothing, etc., air may be drawn in through the gap, the hole, etc. toward inside of the housing 2.

Finally, although various embodiments of the present invention have been described, these are presented as examples and are not intended to limit the scope of the present invention. Other novel embodiments may be implemented in various forms, and various omissions, substitutions, and modification may be made within the scope of invention without departing from the scope of the claims. The embodiments or modifications thereof are included in the scope of the present invention, as well as within the scope of the invention and equivalents thereof recited in the claims.

### REFERENCE SIGNS LIST

1: Electric working machine
11: Hedge trimmer
2: Housing
21: Inlet
22: Outlet
221: First outlet
222: Second outlet
23: Motor
231: Stator
232: Outer rotor
232a: Peripheral wall
232b: Top
233: Output axis
234: Output gear
235: Base member
24: Fan
24a: Vane
25: Guide portion
26: Drive transmission mechanism
261: Drive gear
262: Cam
263: Movable plate
264: Support axis
265: Case
27: Control unit
28: Heat sink
281: Fin
29: Fan case
291: First discharge
292: Second discharge
3: Working portion
31: Lower cutter
32: Upper cutter
33: Blade
4: Front handle
5: Rear handle
51: Gripping portion
52: Throttle lever
53: Lock release lever
54: Power switch
55: Rotation lock lever
56: Opening
6: Battery
61: Connection lever
62: Battery mounting portion
AN1: First angle
AN2: Second angle
AP: Air flow path
AP1: First air flow path
AP2: Second air flow path
AP3: Third air flow path
AP4: Fourth air flow path
AX1: First direction
AX2: Second direction
L: Predetermined width
L1: First width
L2: Second width
O: Rotation center

## Claims

1. A hand-held electric working machine (1) for cutting a work object, comprising:
a working portion (3) configured to cut the work object;
a housing (2) extends in a first direction (AX1) from a rear side where a user is positioned to a front side where the work object is positioned;
a motor (23)
configured to generate rotary power for allowing the working portion (3) to drive, wherein
the motor (23) includes a stator (231), an outer rotor (232), an output axis (233), an output gear (234) and a base member (235),
the stator (231) has two or more coils,
a lower end of the base member (235) is fixed to a case (265) of a drive transmission mechanism (26),
the output axis (233) is inserted into a bearing provided on an inner circumferential surface of the base member (235),
the output axis (233) is inserted into a bearing provided on an inner circumferential surface of the stator (231),
the output gear (234) is provided at a lower end of the output axis (233),
the output gear (234) is meshed with a drive gear (261) of the drive transmission mechanism (26),
the outer rotor (232) includes a cylindrical peripheral wall (232a) surrounding the stator (231) and outer circumference of each coil, and
a top (232b) that covers an upper surface of the peripheral wall (232a), and an upper end of the output axis (233) is connected to a center of a top (232b) of the outer rotor (232); and
a control unit (27) configured to electrically control rotation of the motor (23); wherein
the motor (23) being provided on the rear side of the housing (2), displaced in a second direction (AX2) with respect to a centerline of the housing (2), the centerline extending in the first direction (AX1), the second direction (AX2) being perpendicular to the first direction (AX1),
the rotation center (O) of the outer rotor (232) and the output axis (233) extends in a vertical direction of the housing (2), and
the control unit (27) is positioned opposite the motor (23) across the centerline.

2. The electric working machine (1) according to claim 1, wherein:
the housing (2) has a predetermined width (L) in the second direction (AX2), and
the motor (23) and the control unit (27) are each provided so as not to exceed the predetermined width (L).

3. The electric working machine (1) according to claim 1 or 2, wherein:
the motor (23) is provided in such a manner that a first angle (AN1) is any angle from 15 degrees to 45 degrees, the first angle (AN1) being an acute angle formed by a line connecting a center of a rotation axis of the motor (23) to a predetermined position on the centerline and the centerline.

4. The electric working machine (1) according to any one of claims 1 to 3, wherein:
the control unit (27) is provided in such a manner that a second angle (AN2) is any angle from 15 degrees to 45 degrees, the second angle (AN2) being an acute angle formed by a line along a longitudinal direction of the control unit (27) and the centerline.

5. The electric working machine (1) according to claim 4, wherein:
the control unit (27) is provided in such a manner that the second angle (AN2) is smaller than the first angle (AN1).

6. The electric working machine (1) according to any one of claims 1 to 5, wherein:
the electric working machine (1) is a hedge trimmer (11), a brush cutter, or a chainsaw.

## Patentansprüche

1. Handgeführte elektrische Arbeitsmaschine (1) zum Schneiden eines Werkstücks, mit
einem Arbeitsabschnitt (3), der zum Schneiden des Werkstücks aufgebaut ist;
einem Gehäuse (2), das sich in einer ersten Richtung (AX1) von einer Rückseite, an der sich ein Benutzer befindet, zu einer Vorderseite, an der sich das Werkstück befindet, erstreckt;
einem Motor (23),
der so aufgebaut ist, dass er eine Drehkraft erzeugt, um den Arbeitsabschnitt (3) anzutreiben, wobei
der Motor (23) einen Stator (231), einen Außenrotor (232), eine Abtriebswelle (233), ein Abtriebszahnrad (234) und ein Basiselement (235) aufweist,
der Stator (231) zwei oder mehr Spulen aufweist,
ein unteres Ende des Basiselements (235) an einem Gehäuse (265) eines Antriebsübertragungsmechanismus (26) befestigt ist,
die Abtriebswelle (233) in ein Lager eingesetzt ist, das an einer inneren Umfangsfläche des Basiselements (235) vorgesehen ist,
die Abtriebswelle (233) in ein Lager eingesetzt ist, das an einer inneren Umfangsfläche des Stators (231) vorgesehen ist,
das Abtriebszahnrad (234) an einem unteren Ende der Abtriebswelle (233) vorgesehen ist,
das Abtriebszahnrad (234) mit einem Antriebszahnrad (261) des Antriebsübertragungsmechanismus (26) im Eingriff ist,
der Außenrotor (232) eine zylindrische Umfangswand (232a), die den Stator (231) und den Außenumfang jeder Spule umgibt, und
eine Oberseite (232b), die eine Oberseite der Umfangswand (232a) abdeckt, aufweist, und ein oberes Ende der Abtriebswelle (233) mit einem Mittelpunkt einer Oberseite (232b) des Außenrotors (232) verbunden ist; und
einer Steuereinheit (27),
die so aufgebaut ist, dass sie die Drehung des Motors (23) elektrisch steuert; wobei
der Motor (23) auf der Rückseite des Gehäuses (2) vorgesehen ist, versetzt in einer zweiten Richtung (AX2) in Bezug auf eine Mittellinie des Gehäuses (2), wobei sich die Mittellinie in der ersten Richtung (AX1) erstreckt und die zweite Richtung (AX2) senkrecht zur ersten Richtung (AX1) verläuft,
der Drehpunkt (O) des Außenrotors (232) und die Abtriebswelle (233) in einer vertikalen Richtung des Gehäuses (2) verlaufen, und
die Steuereinheit (27) dem Motor (23) über die Mittellinie hinweg gegenüberliegend angeordnet ist.

2. Elektrische Arbeitsmaschine (1) nach Anspruch 1, wobei:
das Gehäuse (2) in der zweiten Richtung (AX2) eine vorbestimmte Breite (L) aufweist und
der Motor (23) und die Steuereinheit (27) jeweils so angeordnet sind, dass sie die vorbestimmte Breite (L) nicht überschreiten.

3. Elektrische Arbeitsmaschine (1) nach Anspruch 1 oder 2, wobei:
der Motor (23) so angeordnet ist, dass ein erster Winkel (AN1) einen beliebigen Winkel zwischen 15 Grad und 45 Grad bildet, wobei der erste Winkel (AN1) ein spitzer Winkel ist, der durch eine Linie, die den Mittelpunkt einer Drehachse des Motors (23) mit einer vorgegebenen Position auf der Mittellinie verbindet, und die Mittellinie gebildet wird.

4. Elektrische Arbeitsmaschine (1) nach einem der Ansprüche 1 bis 3, wobei:
die Steuereinheit (27) so ausgebildet ist, dass ein zweiter Winkel (AN2) ein beliebiger Winkel zwischen 15 Grad und 45 Grad ist, wobei der zweite Winkel (AN2) ein spitzer Winkel ist, der durch eine Linie entlang einer Längsrichtung der Steuereinheit (27) und die Mittellinie gebildet wird.

5. Elektrische Arbeitsmaschine (1) nach Anspruch 4, wobei:
die Steuereinheit (27) so ausgebildet ist, dass der zweite Winkel (AN2) kleiner ist als der erste Winkel (AN1).

6. Elektrische Arbeitsmaschine (1) nach einem der Ansprüche 1 bis 5, wobei:
die elektrische Arbeitsmaschine (1) eine Heckenschere (11), ein Freischneider oder eine Kettensäge ist.

## Revendications

1. Machine de travail électrique portative (1) pour la découpe d'un objet à travailler, comprenant :
une partie de travail (3) configurée pour découper l'objet à travailler ;
un boîtier (2) s'étendant dans une première direction (AX1) depuis un côté arrière où se trouve un utilisateur jusqu'à un côté avant où se trouve l'objet à travailler ;
un moteur (23) configuré pour générer une puissance rotative permettant d'entraîner la partie de travail, dans laquelle
le moteur (23) inclut un stator (231), un rotor extérieur (232), un axe de sortie (233), un engrenage de sortie (234) et un élément de base (235),
le stator (231) présente deux bobines ou plus,
une extrémité inférieure de l'élément de base (235) est fixée à un carter (265) d'un mécanisme de transmission d'entraînement (26),
l'axe de sortie (233) est inséré dans un palier prévu sur une surface circonférentielle intérieure de l'élément de base (235),
l'axe de sortie (233) est inséré dans un palier prévu sur une surface circonférentielle intérieure du stator (231),
l'engrenage de sortie (234) est prévu au niveau d'une extrémité inférieure de l'axe de sortie (233),
l'engrenage de sortie (234) est engrené avec un engrenage de sortie (261) du mécanisme de transmission d'entraînement (26),
le rotor extérieur (232) inclut une paroi périphérique cylindrique (232a) entourant le stator (231) et la circonférence extérieure de chaque bobine, et
un couvercle (232b) qui recouvre une surface supérieure de la paroi périphérique (232a), et une extrémité supérieure de l'axe de sortie (233) est reliée au centre d'un couvercle (232b) du rotor extérieur (232) ; et
une unité de commande (27) configurée pour commander électriquement la rotation du moteur (23) ; dans laquelle
le moteur (23) est prévu sur le côté arrière du boîtier (2), déplacé dans une seconde direction (AX2) par rapport à une ligne centrale du boîtier (2), la ligne centrale s'étendant dans la première direction (AX1) et la seconde direction (AX2) étant perpendiculaire à la première direction (AX1),
le centre de rotation (O) du rotor extérieur (232) et l'axe de sortie (233) s'étend dans une direction verticale du boîtier (2), et l'unité de commande (27) est positionnée en face du moteur (23) sur la ligne centrale.

2. Machine de travail électrique (1) selon la revendication 1, dans laquelle :
le boîtier (2) présente une largeur prédéterminée (L) dans la seconde direction (AX2), et
le moteur (23) et l'unité de commande (27) sont prévus chacun de manière à ne pas dépasser la largeur prédéterminée (L).

3. Machine de travail électrique (1) selon la revendication 1 ou 2, dans laquelle : le moteur (23) est prévu de telle manière qu'un premier angle (AN1) soit un angle quelconque de 15 degrés à 45 degrés, le premier angle (AN1) étant un angle aigu formé par une ligne reliant un centre d'un axe de rotation du moteur (23) à une position prédéterminée sur la ligne centrale et la ligne centrale.

4. Machine de travail électrique (1) selon l'une quelconque des revendications 1 à 3, dans laquelle :
l'unité de commande (27) est fournie de telle manière qu'un second angle (AN2) soit un angle quelconque de 15 degrés à 45 degrés, le second angle (AN2) étant un angle aigu formé par une ligne le long d'une direction longitudinale de l'unité de commande (27) et la ligne centrale.

5. Machine de travail électrique (1) selon la revendication 4, dans laquelle :
l'unité de commande (27) est fournie de telle manière que le second angle (AN2) soit plus petit que le premier angle (AN1).

6. Machine de travail électrique (1) selon l'une quelconque des revendications 1 à 5, dans laquelle :
la machine de travail électrique (1) est un taille-haie (11), une débroussailleuse ou une tronçonneuse.
